# EUROPEAN PATENT SPECIFICATION

(11) **EP 2 807 691 B1**
(45) Date of publication and mention of the grant of the patent: **01.08.2018**
(21) Application number: 13704499.6
(22) Date of filing: 08.01.2013
(51) Int. Cl.: H01M 2/10, H01M 10/48, H01M 2/20

(54) **POWER SUPPLY DEVICE**
STROMVERSORGUNGSVORRICHTUNG
DISPOSITIF D'ALIMENTATION ÉLECTRIQUE

(30) Priority: 27.01.2012 JP 2012015298
(43) Date of publication of application: 03.12.2014
(73) Proprietor: Yazaki Corporation, Tokyo 108-0073 (JP)
(72) Inventor: OGASAWARA, Shigeyuki, Kakegawa-shi Shizuoka 437-1421 (JP); YANAGIHARA, Shinichi, Kakegawa-shi Shizuoka 437-1421 (JP); OTA, Michio, Kakegawa-shi Shizuoka 437-1421 (JP)
(74) Representative: Hoffmann Eitle
(86) International application number: PCT/JP2013/000010
(87) International publication number: WO 2013/111519

(56) References cited:
- EP-A2- 2 530 777
- WO-A1-2011/027917
- JP-A- 2011 018 454
- US-B1- 6 379 837

## Description

### Technical Field

The present invention relates to a power supply device in which multiple electrodes of battery cells are connected to one another.

### Background Art

A power supply device serving as a drive source of an electric motor is mounted on a hybrid vehicle or an electric vehicle, for example. Patent Literature 1 discloses a related power supply device of this type. As shown in Figs. 1 and 2, a power supply device 100 includes a battery cell assembly 101 and a battery connecting block 110 placed on one side of the battery cell assembly 101 where electrodes of the battery cell assembly 101 protrude.

The battery cell assembly 101 has multiple battery cells 102 stacked in one direction. Each battery cell 102 is provided with a pair of electrodes (positive and negative electrodes) 103 protruding on an upper surface thereof. Each electrode 103 is in the form of a bolt.

The battery connecting block 110 includes a case body 111 made of an insulating resin, multiple connection terminals 121, multiple thermistors 122, a pair of output terminals 120, and multiple voltage detecting terminals 123. The connection terminals 121, the thermistors 122, the pair of output terminals 120, and the voltage detecting terminals 123 are fixed to the case body 111.

The case body 111 includes a pair of terminal fixing areas S1, a wiring area S2, and thermistor routing areas S3. The pair of terminal fixing areas S1 are placed to extend in a longitudinal direction L on two end sides in a width direction W. The wiring area S2 is placed in a portion outside the pair of terminal fixing areas S1 in such a manner as to surround the entire periphery of the pair of terminal fixing areas S1. Each thermistor routing area S3 is placed in a part of a central portion in the width direction W.

Each terminal fixing area S1 has multiple terminal fixing portions 112 and 113 arranged in a row. Every two adjacent terminal fixing portions 112 and 113 (or 113 and 113) are connected to each other via a hinge portion 114. The pair of terminal fixing portions 112 arranged at two ends of one row are used for total power output. Each set of the terminal 120 and voltage detecting terminal 123 is fixed to the corresponding terminal fixing portion 112 for total power output. The output terminal 120 and voltage detecting terminal 123 are fastened, with a nut 124, to a corresponding one of the electrodes 103 located at two ends of the battery cell assembly 101. Each set of the connection terminal 121 and voltage detecting terminal 123 is fixed to the corresponding terminal fixing portion 113. The connection terminal 121 is fastened to the electrodes of the adjacent battery cells 102 with the nuts 124, respectively, and the voltage detecting terminal 123 is fastened to one of these electrodes together with the connection terminal 121.

The wiring area S2 has wire housing portions 115 arranged continuously. Every two adjacent wire housing portions 115 are connected to each other via a hinge portion 116. Voltage detecting wires (not illustrated) connected to the voltage detecting terminals 123 are routed in the wire housing portions 115.

The thermistor routing areas S3 are placed in two separate locations. The thermistor routing area S3 in one location is provided with a thermistor inserting portion 117, a single thermistor wiring route 119, and a pair of wire-deformation prevention walls 118 placed near this thermistor inserting portion 117. The thermistor routing area S3 in the other location is provided with a thermistor inserting portion 117 and a pair of wire-deformation prevention walls 118 placed near this thermistor inserting portion 117. Each pair of wire-deformation prevention walls 118 protrude upward and extend toward the center of the case body 111 in the width direction W. The thermistor wiring route 119 is provided with wire locking claws 119a arranged at intervals.

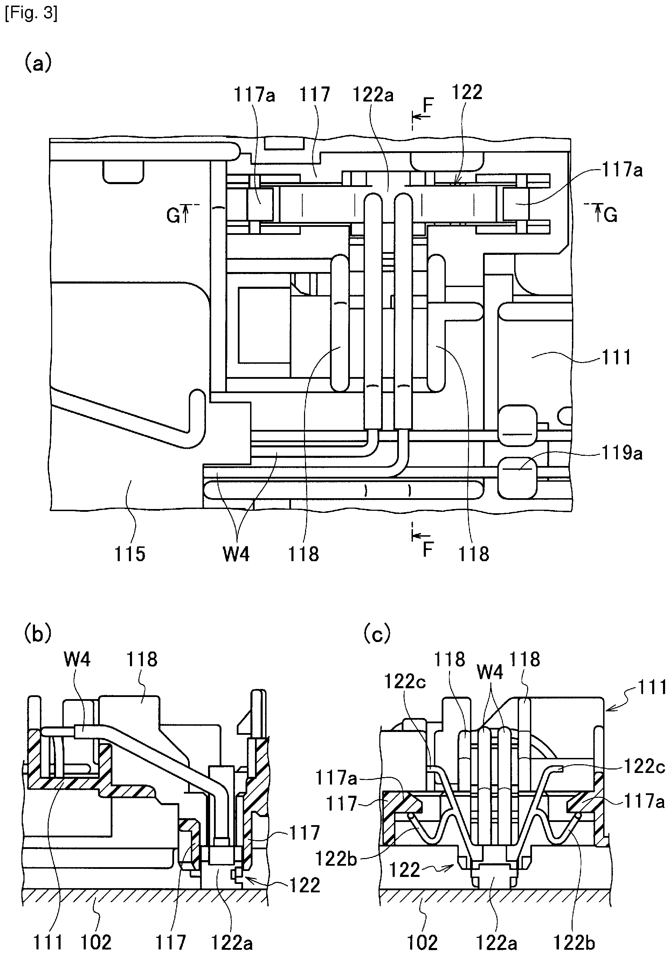

As shown in detail in Figs. 3(a) to 3(c), each thermistor 122 includes a thermistor body 122a, a pair of locking arm portions 122b fixed to the thermistor body 122a, and a pair of press arm portions 122c branching from the respective locking arm portions 122b. Each thermistor 122 is inserted in the thermistor inserting portion 117. While the thermistor 122 is inserted, the pair of locking arm portions 122b are locked with locking portions 117a of the thermistor inserting portion 117, and a leading end surface of the inserted thermistor body 122a is in close contact with the upper surface of the corresponding battery cell 102.

Thermistor wires W4 connected to each thermistor 122 pass through the pair of wire-deformation prevention walls 118 and are guided toward the center of the case body 111 in the width direction W. Among these, the thermistor wires W4 of the thermistors 122 placed at two ends of the case body 111 are directly guided to the wire housing portions 115. The thermistor wires W4 of the thermistor 122 placed in a central portion of the case body 111 pass through the thermistor wiring route 119 located in the central portion of the case body 111, and are guided to the wire housing portion 115 located at an end of the case body 111.

With the above configuration, even when the dimension of the battery cell assembly 101 in the longitudinal direction L varies due to a tolerance in assembling the battery cells 102 and the like, such a tolerance is absorbed by flexural deformation of the hinge portions 114 between the terminal fixing portions 112 and 113 (or 113 and 113) and the hinge portions 116 between the wire housing portions 115. Further, each pair of wire-deformation prevention walls 118 can prevent bending of the thermistor wires W4 near the thermistor 122 when a tensile force acts on the thermistor wires W4 due to the tolerance in assembling the battery cells 102 and the like. Specifically, the pair of wire-deformation prevention walls 118 can protect a fragile output terminal portion (not illustrated), which protrudes from the thermistor body 122a and is incorporated in the thermistor wires W4 near the thermistor 122.

Also, document US 6,379,837 B1 discloses a battery device loaded on a moving body. Reference may also be made to the busbar module disclosed in WO 2011/027917 A1 and to the temperature measuring system disclosed in EP 2 530 777 A2.

### Citation List

### Patent Literature

PTL1: Japanese Unexamined Patent Application Publication No. 2011-18454

### Summary of Invention

However, the thermistor routing area S3 needs to be large because the power supply device 100 has such a configuration that each pair of wire-deformation prevention walls 118 are placed near the thermistor inserting portion 117 to extend in a direction away from the thermistor inserting portion 117, i.e., toward the center of the case body 111 in the width direction W. Further, the wire-deformation prevention walls 118 protruding near the thermistor inserting portion 117 deteriorate operability of inserting the thermistor 122. Furthermore, when a tensile force acts on the thermistor wires W4, the pair of wire-deformation prevention walls 118 can prevent the thermistor wires W4 from bending but cannot prevent the tensile force from acting on the thermistor 122 itself. Such a tensile force may therefore damage the thermistor 122.

An object of the present invention is to provide a power supply device capable of saving space for the thermistor routing area and improving operability of inserting the thermistor, as well as preventing the thermistor itself from being damaged by the tensile force acting on the thermistor wire.

A power supply device according to the present invention includes a battery cell assembly being an assembly of battery cells each having electrodes, a battery connecting block placed on a side of the battery cell assembly where the electrodes protrude, the battery connecting block including a case body including terminal fixing portions and a thermistor inserting portion, terminals fixed to the corresponding terminal fixing portions, and a thermistor disposed in the thermistor inserting portion and configured to detect a temperature of the battery cells, and a thermistor wire drawn from the thermistor to extend along the thermistor inserting portion and fixed to the case body by a binding band.

The thermistor wire may be configured to be routed to extend along a periphery of the thermistor inserting portion and guided to a wire housing portion through a wiring route curving around the corresponding terminal fixing portion.

According to the above configurations, since the thermistor wire is routed to extend along the thermistor inserting portion, the space for the thermistor routing area can be saved. In addition, since the thermistor wire is fixed to the case body by use of the binding band, it is possible to prevent the thermistor wire from binding without providing any wire-deformation prevention walls unlike in the foregoing related example. Further, since a tensile force on the thermistor wire does not act on a part of the thermistor wire closer to the thermistor than the binding band, it is also possible to prevent the tensile force from acting on the thermistor itself. Furthermore, since no wire-deformation prevention walls need to be provided near the thermistor inserting portion, the thermistor insertion work can be facilitated. In this way, the above configurations make it possible to save the space for the thermistor routing area and improving operability of inserting the thermistor, as well as reliably preventing the thermistor from being damaged by the tensile force acting on the thermistor wire.

### Brief Description of Drawings

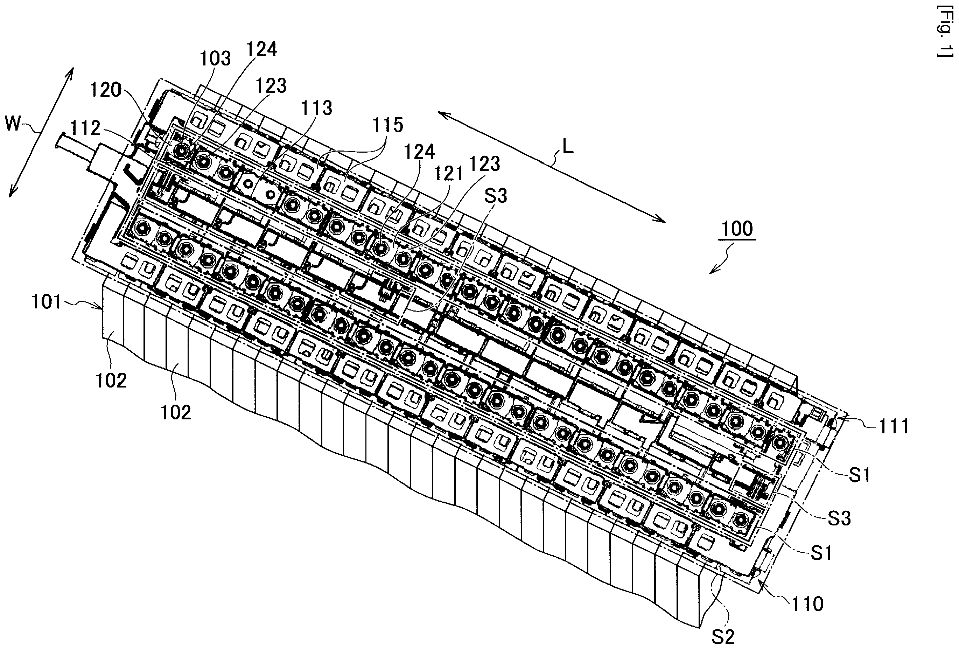

[fig. 1] Fig. 1 is an overall perspective view of a related power supply device.

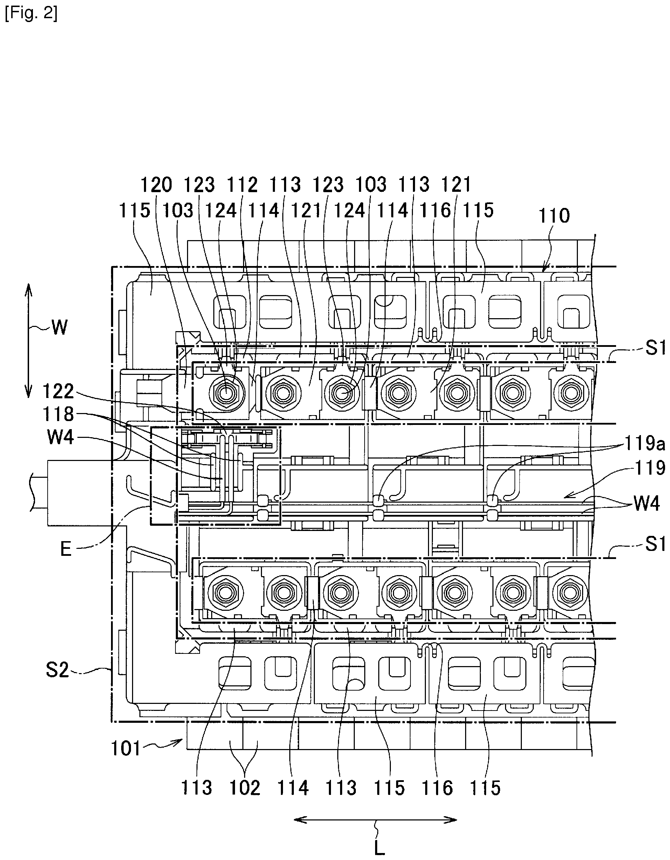

[fig.2]Fig. 2 is an enlarged plan view showing a main portion of the related power supply device.
[fig.3]Fig. 3(a) is an enlarged view of the part E of Fig. 2, Fig. 3(b) is a cross-sectional view taken along the F-F line in Fig. 3(a), and Fig. 3(c) is a cross-sectional view taken along the G-G line in Fig. 3(a).
[fig.4]Fig. 4 is an overall plan view of a power supply device according to an embodiment of the present invention.
[fig.5]Figs. 5(a) to 5(c) also show the embodiment of the present invention, in which
Fig. 5(a) is an enlarged view of the part A of Fig. 4, Fig. 5(b) is a cross-sectional view taken along the B-B line in Fig. 5(a), and Fig. 5(c) is a cross-sectional view taken along the C-C line in Fig. 5(a).
[fig.6]Fig. 6 also shows the embodiment of the present invention, which is a cross-sectional view taken along the D-D line in Fig 4.

### Description of Embodiments

Hereinbelow, an embodiment of the present invention will be descried based on the drawings.

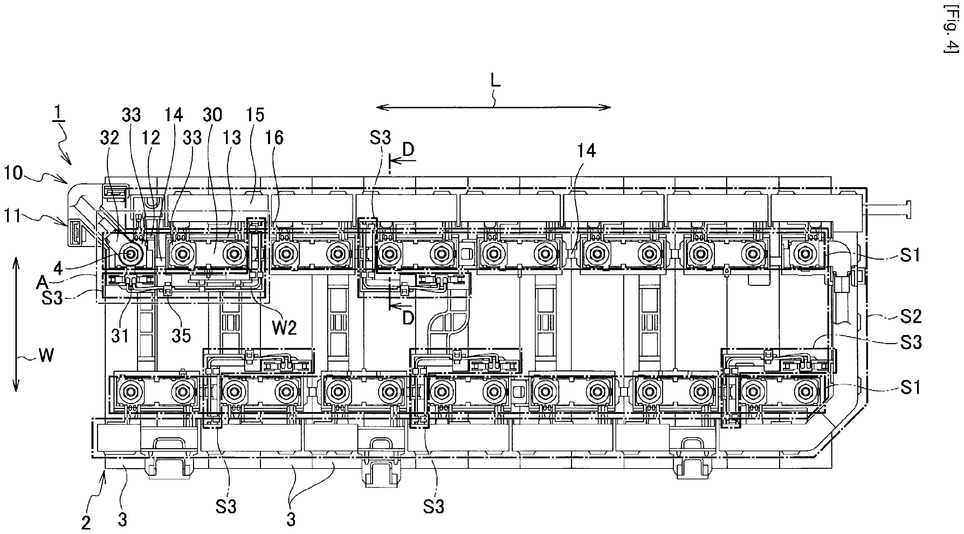

Figs. 4 to 6 show the embodiment of the present invention. As shown in Figs. 4 to 6, a power supply device 1 includes a battery cell assembly 2 and a battery connecting block 10 placed on one side of the battery cell assembly 2 where electrodes of the battery cell assembly 2 protrude.

The battery cell assembly 2 is an assembly of multiple battery cells 3 stacked in one direction. Each battery cell 3 is provided with a pair of electrodes (positive and negative electrodes) 4 protruding on an upper surface thereof. Each electrode 4 is in the form of a bolt.

The battery connecting block 10 includes a case body 11 made of an insulating resin, multiple connection terminals 30, multiple thermistors 31, a pair of output terminals 32, and multiple voltage detecting terminals 33. The connection terminals 30, the thermistors 31, the pair of output terminals 32, and the voltage detecting terminals 33 are fixed to the case body 11.

The case body 11 includes a pair of terminal fixing areas S1, a wiring area S2, and thermistor routing areas S3. The pair of terminal fixing areas S1 are placed to extend in a longitudinal direction L on two end sides in a width direction W. The wiring area S2 is placed in the form of a "U" shape in a position outside the pair of terminal fixing areas S1. Each of the multiple thermistor routing areas S3 is placed in a position inside the pair of terminal fixing areas S1 in such a manner as to partially overlap the pair of terminal fixing areas S1.

Each terminal fixing area S1 has multiple terminal fixing portions 12 and 13 arranged in a row. Every two adjacent terminal fixing portions 12 and 13 (or 13 and 13) are connected to each other via a hinge portion 14. The pair of terminal fixing portions 12 arranged at two ends of one row are used for total power output. Each set of the output terminal 32 and voltage detecting terminal 33 is fixed to the corresponding terminal fixing portion 12 for total power output. The output terminal 32 and voltage detecting terminal 33 are fastened, with a nut 34, to the corresponding one of electrodes 4 located at two ends of the battery cell assembly 2. Each set of the connection terminal 30 and voltage detecting terminal 33 is fixed to the corresponding terminal fixing portion 13. One end of the connection terminal 30 is fastened to an electrode 4 of one of the adjacent battery cells 3 with a nut 34, whereas the other end of the connection terminal 30 and the voltage detecting terminal 33 are fastened to an electrode 4 of the other battery cell 3 with a nut 34. The connection terminals 30 thus connect the electrodes 4 of the adjacent battery cells 3 to one another.

The hinge portion 14 is capable of changing an interval between every adjacent two terminal fixing portions 12 and 13 (or 13 and 13) by means of flexural deformation. The terminal fixing portions 12 and 13 (or 13 and 13) of the respective two rows arranged at substantially corresponding positions are connected to one another via connection arm portions 18 with some exceptions.

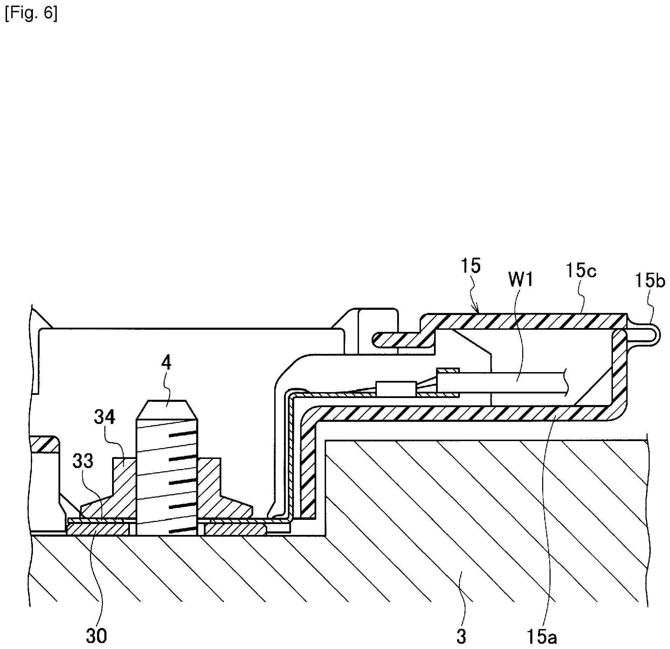

The wiring area S2 has wire housing portions 15 arranged in a row. Every two adjacent wire housing portions 15 are connected to each other via a hinge portion 16. As shown in detail in Fig. 6, each wire housing portion 15 includes a housing base portion 15a, a hinge portion 15b, and a lid 15c connected to the housing base portion 15a via the hinge portion 15b. A voltage detecting wire W1 connected to the voltage detecting terminal 33 is guided into the nearest wire housing portion 15 and routed by use of the wire housing portions 15 continuous from the nearest wire housing portion 15.

The thermistor routing areas S3 are placed in separate locations where the respective thermistors 31 are situated. The thermistor routing area S3 in each location is provided with a thermistor inserting portion 20 and a thermistor wiring route 21 for connecting the thermistor inserting portion 20 and the nearest wire housing portion 15. The thermistor inserting portion 20 is provided with a pair of locking portions 20a. The thermistor wiring route 21 is a passage which is routed to extend along the periphery of the thermistor inserting portion 20 and is guided to the wire housing portion 15 while curving around the nearest terminal fixing portion 13. On the thermistor wiring route 21, a band fixing portion 22 is provided and wire locking portions 23 are provided at intervals.

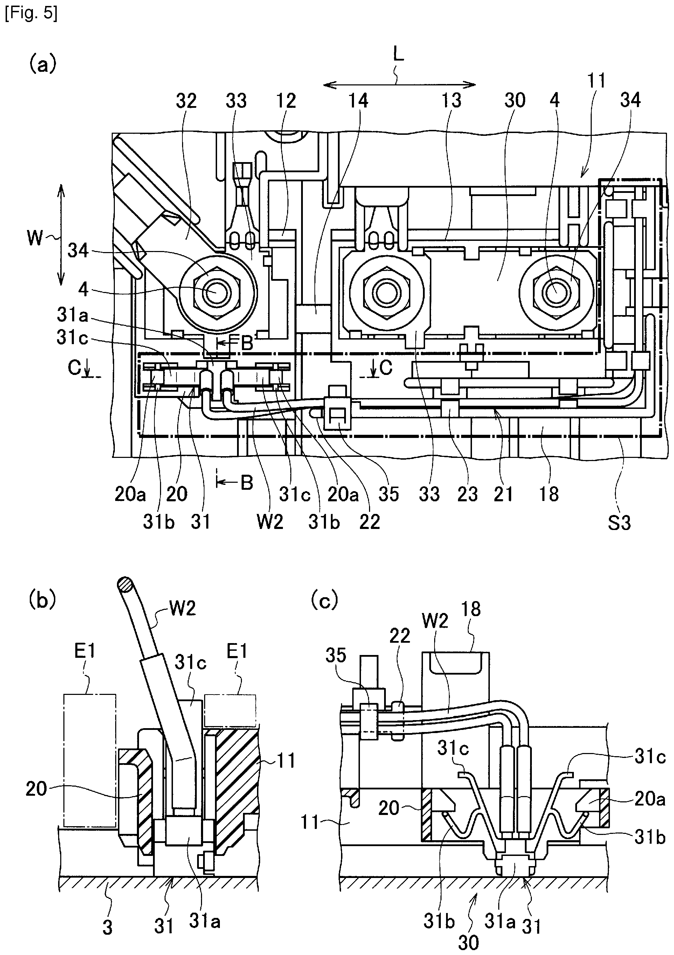

As shown in detail in Figs. 5(a) to 5(c), each thermistor 31 includes a thermistor body 31a, a pair of locking arm portions 31b fixed to the thermistor body 31a, and a pair of press arm portions 31c branching from the respective locking arm portions 31b. In the thermistor 31, the pair of locking arm portions 31b are locked with locking portions 20a of the thermistor inserting portion 20, and thereby a leading end surface of the inserted thermistor 31 is in close contact with the upper surface of the corresponding battery cell 3.

A worker inserts the thermistor 31 from above the case body 11 into the thermistor inserting portion 20. When the thermistor 31 is inserted halfway, the worker presses the pair of press arm portions 31c from above into such a position that the leading end surface of the inserted thermistor 31 is brought into close contact with the upper surface of the battery cell 3. Once the leading end surface of the inserted thermistor 31 is brought into close contact with the upper surface of the battery cell 3, the pair of locking arm portions 31b are elastically and resiliently deformed back to its original shape and are locked with the pair of locking portions 20a. The work for inserting the thermistor 31 is thus completed. The thermistor 31 detects a temperature of the battery cell 3 by means of heat transmitted from the upper surface of the battery cell 3.

Thermistor wires W2 are drawn out of each thermistor 31 to extend along the periphery of the thermistor inserting portion 20. The thermistor wires W2 thus drawn out are routed along the thermistor wiring route 21 and guided to the nearest wire housing portion 15. The thermistor wires W2 are fixed to the case body 11 at the band fixing portion 22 by use of a binding band 35. The thermistor wires W2 are fixed by use of the binding band 35 at a position ahead of a position where an output terminal portion (not illustrated) protruding from the thermistor body 31a is situated.

With the above configuration, even when the dimension of the battery cell assembly 2 in the longitudinal direction L varies due to a tolerance in assembling the battery cells 3 and the like, such a dimensional variation is absorbed by flexural deformation of the hinge portions 14 between the terminal fixing portions 12 and 13 (or 13 and 13) and the hinge portions 16 between the wire housing portions 15.

Since the thermistor wires W2 are routed to extend along each thermistor inserting portion 20, a central area of the case body 11 is not used as the thermistor routing areas S3. Accordingly, the space for the thermistor routing areas S3 can be saved. In addition, since the thermistor wires W2 are fixed to the case body 11 by use of the binding band 35, it is possible to prevent the thermistor wires W2 from bending without providing any wire-deformation prevention walls unlike in the foregoing related example. Further, since a tensile force on the thermistor wires W2 does not act on a part of the thermistor wires closer to the thermistor 31 than the binding band 35, it is also possible to prevent the tensile force from acting on the thermistor 31 itself. Furthermore, as described previously, no wire-deformation prevention walls as in the example related to the present invention need to be provided near the thermistor inserting portion 20. Hence, a space (E1 areas in Fig. 5(b)) which would otherwise be required for wire-deformation prevention walls can be used as a space for the work for inserting the thermistor 31, thus facilitating the insertion work. In this way, the above configuration makes it possible to save the space for the thermistor routing areas, to improve operability of inserting the thermistor 31, and to reliably prevent the thermistor 31 from being damaged due to the tensile force acting on the thermistor wires W2.

As described above, since the space for the thermistor routing area can be saved, the size of the case body 11 can be reduced and a resin material required for the case body can therefore be reduced. Moreover, since no wire-deformation prevention walls as in the related example need to be provided, the case body 11 can be reduced in height, thereby reducing the size of the case body and reducing the resin material required for the case body. In addition, since the space for the thermistor routing area can be saved, a larger space is available for other purposes (purposes other than for the thermistor routing area).

The thermistor wires W2 are routed to extend along each thermistor inserting portion 20 and is guided to the wire housing portion 15 through the wiring route curving around the corresponding terminal fixing portion. Thus, it is possible to integrate and simplify the wiring route as a whole.

## Claims

1. A power supply device (1) comprising:
a battery cell assembly (2) being an assembly of battery cells (3) each having electrodes (4);
a battery connecting block (10) placed on a side of the battery cell assembly (2) where the electrodes (4) protrude, the battery connecting block (10) comprising a case body (11) including terminal fixing portions (12, 13) and a thermistor inserting portion (20), terminals (30) fixed to the corresponding terminal fixing portions (12, 13), and a thermistor (31) disposed in the thermistor inserting portion (20) and configured to detect a temperature of the battery cells (3); and
a thermistor wire (W2) drawn from the thermistor (31) to extend along the thermistor inserting portion (20) and fixed to the case body (11) by a binding band (35).

2. The power supply device (1) according to claim 1, wherein the thermistor wire (W2) is configured to be routed to extend along a periphery of the thermistor inserting portion (20) and guided to a wire housing portion (15) through a wiring route (21) curving around the corresponding terminal fixing portion (12, 13).

3. The power supply device according to claim 1 or 2, wherein a central area of the case body (11) is not used as a routing area for the thermistor wire (W2).

## Patentansprüche

1. Stromversorgungsvorrichtung (1), umfassend:
eine Batteriezellenanordnung (2), welche eine Anordnung von Batteriezellen (3) ist, welche jeweils Elektroden (4) aufweisen;
einen Batterieanschlussblock (10), welcher auf einer Seite der Batteriezellenanordnung (2) platziert ist, wo die Elektroden (4) hervorstehen, wobei der Batterieanschlussblock (10) einen Gehäusekorpus (11) umfasst, welcher Anschlussfixierabschnitte (12, 13) und einen Thermistoreinschubabschnitt (20), Anschlüsse (30), welche an den zugehörigen Anschlussfixierabschnitten (12, 13) fixiert sind, und einen Thermistor (31), welcher in dem Thermistoreinschubabschnitt (20) angeordnet ist, beinhaltet und konfiguriert ist, eine Temperatur der Batteriezellen (3) zu erkennen; und
einen Thermistordraht (W2), welcher aus dem Thermistor (31) gezogen wird, um sich entlang des Thermistoreinschubabschnitts (20) zu erstrecken und an dem Gehäusekorpus (11) mittels eines Verbindungsbandes (35) fixiert zu werden.

2. Stromversorgungsvorrichtung (1) nach Anspruch 1, wobei der Thermistordraht (W2) konfiguriert ist, geführt zu werden, um sich entlang eines Umfangsbereichs des Thermistoreinschubabschnitts (20) zu erstrecken und zu einem Drahtgehäuseabschnitt (15) durch eine Verdrahtungsroute (21) geführt zu werden, welche sich rund um den entsprechenden Anschlussfixierabschnitt (12, 13) krümmt.

3. Stromversorgungsvorrichtung nach Anspruch 1 oder 2, wobei ein zentraler Bereich des Gehäusekorpus (11) nicht als ein Führungsbereich für den Thermistordraht (W2) verwendet wird.

## Revendications

1. Dispositif d'alimentation en énergie (1) comprenant :
un ensemble cellule de batterie (2) qui est un ensemble de cellules de batterie (3) ayant chacune des électrodes (4) ;
un bloc de connexion de batterie (10) placé sur un côté de l'ensemble cellule de batterie (2) où les électrodes (4) dépassent, le bloc de connexion de batterie (10) comprenant un corps de boîtier (11) incluant des portions de fixation de borne (12, 13) et une portion d'insertion de thermistance (20), des bornes (30) fixées aux portions de fixation de borne correspondantes (12, 13), et une thermistance (31) disposée dans la portion d'insertion de thermistance (20) et configurée pour détecter une température des cellules de batterie (3) ; et
un fil de thermistance (W2) tiré depuis la thermistance (31) pour s'étendre le long de la portion d'insertion de thermistance (20) et fixé au corps de boîtier (11) par une bande de liaison (35).

2. Dispositif d'alimentation en énergie (1) selon la revendication 1, dans lequel le fil de thermistance (W2) est configuré pour être acheminé pour s'étendre le long d'une périphérie de la portion d'insertion de thermistance (20) et guidé jusqu'à une portion de logement de fil (15) par un itinéraire de câblage (21) s'incurvant autour de la portion de fixation de borne correspondante (12, 13).

3. Dispositif d'alimentation en énergie selon la revendication 1 ou 2, dans lequel une zone centrale du corps de boîtier (11) n'est pas utilisée en tant que zone de cheminement pour le fil de thermistance (W2).
